(19) Europäisches Patentamt
European Patent Office
Office européen des brevets

(11) Veröffentlichungsnummer : **0 025 549**
**B1**

(12) # EUROPÄISCHE PATENTSCHRIFT

(45) Veröffentlichungstag der Patentschrift : **09.03.83**

(51) Int. Cl.³ : **C 08 G 18/66**

(21) Anmeldenummer : **80105227.5**

(22) Anmeldetag : **03.09.80**

(54) **Verfahren zur Herstellung von elastischen, flammkaschierbaren und hochfrequenzverschweissbaren Polyurethanschaumstoffen und die hierbei erhaltenen Produkte.**

(30) Priorität : **14.09.79 DE 2937330**

(43) Veröffentlichungstag der Anmeldung : **25.03.81 Patentblatt 81/12**

(45) Bekanntmachung des Hinweises auf die Patenterteilung : **09.03.83 Patentblatt 83/10**

(84) Benannte Vertragsstaaten : **BE DE FR GB IT NL SE**

(56) Entgegenhaltungen :
**DE A 1 769 482**
**US A 3 205 120**
**US A 3 467 731**

**Die Akte enthält technische Angaben, die nach dem Eingang der Anmeldung eingereicht wurden und die nicht in dieser Patentschrift enthalten sind.**

(73) Patentinhaber : **BAYER AG**
**Zentralbereich Patente, Marken und Lizenzen**
**D-5090 Leverkusen 1, Bayerwerk (DE)**

(72) Erfinder : **König, Klaus, Dr.**
**Heymannstrasse 50**
**D-5090 Leverkusen 1 (DE)**
Erfinder : **Seifert, Peter, Dr.**
**August-Kierspel-Strasse 161**
**D-5060 Bergisch-Gladbach (DE)**
Erfinder : **Reichmann, Wolfgang, Dr.**
**Vohwinkelallee 19**
**D-4000 Düsseldorf (DE)**
Erfinder : **Illger, Hans-Walter, Dr.**
**Im Tentefeld 27**
**D-5064 Rösrath (DE)**
Erfinder : **Müller, Heinz, Dr.**
**Feldsieferweg 1**
**D-5090 Leverkusen 3 (DE)**

**EP 0 025 549 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

Verfahren zur Herstellung von elastischen, flammkaschierbaren und hochfrequenzverschweissbaren Polyurethanschaumstoffen und die hierbei erhaltenen Produkte

Urethangruppen aufweisende Schaumstoffe, die durch Umsetzungen von Polyisocyanaten mit Polyether- und/oder Polyesterpolyolen und mit nieder molekularen Polyolen erhalten werden, sind bekannt und finden weite Anwendung. Die Anwendungsmöglichkeiten speziell der Polyetherschaumstoffe werden indes durch die nicht oder nur ungenügend gegebene Flammkaschierbarkeit und Hochfrequenz (HF)-Verschweißbarkeit in manchen Bereichen stark eingeschränkt. Einsatzgebiete, wo diese Eigenschaften besonders erwünscht sind, sind beispielsweise die Herstellung von Verbundsystemen mit folienartigen und/oder textilen Deckschichten durch Flammkaschierung ; häufig werden solche Verbundsysteme durch HF-Verschweißung nachträglich mit Konturen versehen und/oder verformt.

Es ist bekannt, Schaumstoffe aus Polyisocyanaten und Polyesterpolyolen unter Zusatz geeigneter Hilfs- und Zusatzstoffe herzustellen, die von Natur aus flammkaschierbar und auch in gewissem Umfange hochfrequenzverschweißbar sind. Diese Schaumstoffe sind jedoch nur auf speziellen Verarbeitungsmaschinen herstellbar und sind in einer Reihe von Eigenschaften den Polyetherpolyurethanstoffen unterlegen ; z. B. ist die Offenporigkeit schlechter, die Elastizität niedriger und die Widerstandsfähigkeit gegen Feuchtigkeit und Wärme geringer.

Es ist auch bekannt, flammkaschierbare und hochfrequenzverschweißbare Polyurethanschaumstoffe aus Polyetherpolyolen, aus Polyisocyanaten, Wasser und/oder Treibmitteln in Gegenwart von Emulgatoren, Stabilisatoren, Katalysatoren sowie anderer Hilfsmittel durch Zusatz spezieller Hilfsmittel herzustellen.

So wird in der US-PS 3 205 120 die Herstellung von flammkaschierbaren Polyether-Polyurethan-Schaumstoffen durch Zusatz einer geringeren Menge eines Polyols vom Molekulargewicht 200 bis 1 500 beschrieben. Speziell verwendet werden phosphorhaltige Polyole wie Tris (dipropylenglykol) phosphit. Nachteilig an diesem Verfahren sind eine Verschlechterung der Verarbeitungssicherheit, eine gewisse Tendenz zur Kernverfärbung sowie ein bei den üblichen Einsatzmengen resultierendes Flammkaschierverhalten, das dem eines Polyesterpolyurethanschaumes deutlich unterlegen ist.

Weiterhin ist aus der US-PS 4 060 439 die Mitverschäumung geringer Mengen von Alkylenglykolen mit 2-8 C-Atomen, die Mitverschäumung von Triolen mit 3-10 C-Atomen, die Mitverschäumung von Dialkanolaminen mit 2-10 C-Atomen sowie von kurzkettigen Glykolethern und von mehrwertigen Phenolen in Polyetherweichschaumrezepturen bekannt. Erfahrungsgemäß bringt die Mitverschäumung solcher Verbindungen jedoch eine schwierigere Verschäumung und insbesondere ein sehr enges Verarbeitungsspiel zwischen Offen- und Geschlossenporigkeit mit sich.

Angesichts der beschriebenen Nachteile bei den Polyetherpolyurethanschaumstoffen, welche erklären, daß für die Flammkaschierung und Hochfrequenzverschweißung größtenteils Polyesterpolyurethanschaumstoffe eingesetzt werden, besteht ein großer Bedarf für einen produktionssicheren, flammkaschierbaren und HF-verschweißbaren Polyetherschaumstoff.

Überraschenderweise wurde nun gefunden, daß im Gegensatz zu den in der US-PS 4 060 439 beschriebenen Verbindungen die Mitverschäumung von Hydroxypivalinsäureneopentylglykolester in Polyetherpolyurethanweichschaumrezepturen nicht zu Geschlossenzelligkeit und Verarbeitungsschwierigkeiten führt, sondern einen optimal offenzelligen, elastischen Weichschaumstoff mit hervorragenden mechanischen Eigenschaften ergibt, der sehr gut flammkaschierbar und in gewissem Umfang HFverschweißbar ist.

Gegenstand der Erfindung ist ein Verfahren zur Herstellung von elastischen, flammkaschierbaren und hochfrequenz-verschweißbaren Polyurethanschaumstoffen durch Umsetzung von

a) Polyisocyanaten mit

b) mindestens zwei Hydroxylgruppen aufweisenden Polyethern vom Molekulargewicht 400 bis 10 000 sowie

c) einer Zusatzverbindung, die eine Flammkaschierbarkeit und Hochfrequenzverschweißbarkeit des Schaumstoffes bewirkt, in Gegenwart von Treibmitteln, gegebenenfalls unter Mitverwendung von

d) Kettenverlängerungsmitteln, Katalysatoren, Stabilisatoren und weiteren an sich bekannten Zusatzstoffen, das dadurch gekennzeichnet ist, daß als Komponente c) Hydroxipivalinsäureneopentylglykolester der Formel

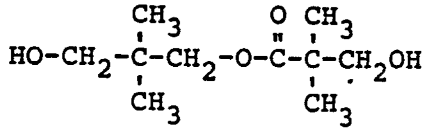

in Mengen von 1-20 Gew.-%, vorzugsweise 3-10 Gew.-%, bezogen auf den Hydroxylgruppen aufweisenden Polyether, verwendet wird.

Gegenstand der Erfindung sind auch Polyurethanschaumstofte, erhältlich nach dem obengenannten Verfahren.

Überraschenderweise wurde gefunden :

1. Die erfindungsgemäß zu verwendende, den Schaumstoff flammkaschierbar und hochfrequenzverschweißbar machende Verbindung weist den Vorteil auf, daß sie chemisch eingebaut und somit gleichmäßig innerhalb der gesamten Schaummasse verteilt und gleichzeitig fest in dem Schaumgerüst verankert ist.

2. Die erfindungsgemäß zu verwendende Verbindung stellt eine Substanz dar, die sich mit den Polyetherpolyolen und den übrigen Schaumkomponenten sehr gut und sehr schnell mischen läßt. Die schnelle und intensive Vermischung der Komponenten bringt erhebliche Vorteile : Die Stabilität der Schaumstoffe während der Herstellung wird verbessert, die Schaumstoffe zeigen im Entstehungszustand keine Tendenz zum Zusammenfallen und weisen bei Ablauf des Schäumvorganges eine feine, regelmäßig ausgebildete Zellstruktur auf.

3. Die Schaumstoffe zeigen trotz des Einbaus der für die Flammkaschierbarkeit und Hochfrequenzverschweißbarkeit verantwortlichen Verbindung gleiche oder sogar in wesentlichen Punkten verbesserte mechanische Eigenschaften wie der ohne derartige Zusätze hergestellte Schaumstoff.

4. Die Herstellung solcher flammkaschierbarer und hochfrequenzverschweißbarer Schaumstoffe kann auf Maschinen, wie sie in der Polyurethan-Polyetherschaumstoffproduktion üblich sind, erfolgen und ist deshalb mit keinem technischen Mehraufwand verbunden.

Für die Durchführung des erfindungsgemäßen Verfahrens werden eingesetzt :

1. Als Ausgangskomponenten aliphatische, cycloaliphatische, araliphatische, aromatische und heterocyclische Polyisocyanate, wie sie z. B. von W. Siefken in Justus Liebigs Annalen der Chemie, 562, Seiten 75 bis 136, beschrieben werden, beispielsweise solche der Formel

$$Q\ (NCO)_n$$

in der

n = 2-4, vorzugsweise 2, und

Q einen aliphatischen Kohlenwasserstoffrest mit 2-18, vorzugsweise 6-10 C-Atomen, einen cycloaliphatischen Kohlenwasserstoffrest mit 4-15, vorzugsweise 5-10 C-Atomen, einen aromatischen Kohlenwasserstoffrest mit 6-15, vorzugsweise 6-13 C-Atomen, oder einen araliphatischen Kohlenwasserstoffrest mit 8-15, vorzugsweise 8-13 C-Atomen, bedeuten, z. B. Äthylen-diisocyanat, 1,4-Tetramethylendiisocyanat, 1,6-Hexamethylendiisocyanat, 1,12-Dodecandiisocyanat, Cyclobutan-1,3-diisocyanat, Cyclohexan-1,3- und -1,4-diisocyanat sowie beliebige Gemische dieser Isomeren, 1-Isocyanato-3,3,5-trimethyl-5-isocyanatomethyl-cyclohexan (DE-Auslegeschrift 1 202 785, US-Patentschrift 3 401 190), 2,4- und 2,6-Hexahydrotoluylendiisocyanat sowie beliebige Gemische dieser Isomeren, Hexahydro-1,3- und/oder -1,4-phenylen-diisocyanat, Perhydro-2,4'- und/oder -4,4'-diphenyl-methandiisocyanat, 1,3- und 1,4-Phenylendiisocyanat, 2,4- und 2,6-Toluylendiisocyanat sowie beliebige Gemische dieser Isomeren, Diphenylmethan-2,4'- und/oder -4,4'-diisocyanat, Naphthylen-1,5-diisocyanat.

Ferner kommen beispielsweise erfindungsgemäß in Frage : Polyphenyl-polymethylen-polyisocyanate, wie sie durch Anilin-Formaldehyd-Kondensation und anschließende Phosgenierung erhalten und z. B. in den GB-Patentschriften 874 430 und 848 671 beschrieben werden, Carbodiimidgruppen aufweisende Polyisocyanate, wie sie in der DE-Patentschrift 1 092 007 (US-Patentschrift 3 152 162) sowie in den DE-Offenlegungsschriften 2 504 400, 2 537 685 und 2 552 350 beschrieben werden, Norbornan-Diisocyanate gemäß US-Patentschrift 3 492 330, Allophanatgruppen aufweisende Polyisocyanate, wie sie z. B. in der GB-Patentschrift 994 890, der BE-Patentschrift 761 626 und der NL-Patentanmeldung 7 102 524 beschrieben werden, Isocyanuratgruppen aufweisende Polyisocyanate, wie sie z. B. in der US-Patentschrift 3 001 973, in den DE-Patentschriften 1 022 789, 1 222 067 und 1 027 394 sowie in den DE-Offenlegungsschriften 1 929 034 und 2 004 048 beschrieben werden, Urethangruppen aufweisende Polyisocyanate, wie sie z. B. in der BE-Patentschrift 752 261 oder in den US-Patentschriften 3 394 164 und 3 644 457 beschrieben werden, Biuretgruppen aufweisende Polyisocyanate, wie sie z. B. in den US-Patentschriften 3 124 605, 3 201 372 und 3 124 605 sowie in der GB-Patentschrift 889 050 beschrieben werden, Estergruppen aufweisende Polyisocyanate, wie sie z. B. in den GB-Patentschriften 965 474 und 1 072 956, in der US-Patentschrift 3 567 763 und in der DE-Patentschrift 1 231 688 genannt werden, polymere Fettsäureester enthaltende Polyisocyanate gemäß der US-Patentschrift 3 455 883.

Bevorzugt werden in der Regel die technisch leicht zugänglichen Polyisocyanate, z. B. das 2,4- und 2,6- Toluylendiisocyanat sowie beliebige Gemische dieser Isomeren (« TDI »), Polyphenyl-polymethylen-polyisocyanate, wie sie durch Anilin-Formaldehyd-Kondensation und anschließende Phosgenierung hergestellt werden (« rohes MDI ») und Carbodiimidgruppen, Urethangruppen, Allophanatgruppen, Isocyanuratgruppen oder Biuretgruppen aufweisende Polyisocyanate (« modifizierte Polyisocyanate »), insbesondere solche modifizierten Polyisocyanate, die sich vom 2,4- und/oder 2,6-Toluylendiisocyanat bzw. vom 4,4'- und/oder 2,4'-Diphenylmethandiisocyanat ableiten.

2. Als Ausgangskomponenten ferner Polyether mit mindestens zwei Hydroxylgruppen von einem Molekulargewicht von 400-10 000, insbesondere zwei bis acht Hydroxylgruppen aufweisende Polyether, speziell solche vom Molekulargewicht 1 000 bis 6 000, vorzugsweise aber 2 bis 4 Hydroxylgruppen

aufweisende Polyäther.

Die erfindungsgemäß in Frage kommenden, mindestens zwei, in der Regel zwei bis acht, vorzugsweise zwei bis drei, Hydroxylgruppen aufweisenden Polyether sind solche der an sich bekannten Art und werden z. B. durch Polymerisation von Epoxiden wie Äthylenoxid, Propylenoxid, Butylenoxid, Tetrahydrofuran, Styroloxid oder Epichlorhydrin mit sich selbst, z. B. in Gegenwart von Lewis-Katalysatoren wie $BF_3$, oder durch Anlagerung dieser Epoxide, vorzugsweise von Äthylenoxid und Propylenoxid, gegebenenfalls im Gemisch oder nacheinander, an Startkomponenten mit reaktionsfähigen Wasserstoffatomen wie Wasser, Alkohole, Ammoniak oder Amine, z. B. Äthylenglykol, Propylenglykol-(1,3) oder -(1,2), Trimethylolpropan, Glycerin, Sorbit, 4,4'-Dihydroxydiphenylpropan, Anilin, Äthanolamin oder Äthylendiamin hergestellt. Auch Sucrosepolyether, wie sie z. B. in den DE-Auslegeschriften 1 176 358 und 1 064 938 beschrieben werden, sowie auf Formit oder Formose gestartete Polyether (DE-Offenlegungsschriften 2 639 083 bzw. 2 737 951), kommen erfindungsgemäß in Frage. Vielfach sind solche Polyether bevorzugt, die überwiegend (bis zu 90 Gew.-%, bezogen auf alle vorhandenen OH-Gruppen im Polyether) primäre OH-Gruppen aufweisen. Auch OH-Gruppen aufweisende Polybutadiene sind erfindungsgemäß geeignet. Erfindungsgemäß können (bis zu 50 Gew.-%, bezogen auf den Polyether) mindestens zwei Hydroxylgruppen aufweisende Polythioether oder Polyacetale vom Molekulargewicht 400-10 000 mitverwendet werden.

Unter den Polythioethern seien insbesondere die Kondensationsprodukte von Thiodiglykol mit sich selbst und/oder mit anderen Glykolen, Dicarbonsäuren, Formaldehyd, Aminocarbonsäuren oder Aminoalkoholen angeführt. Je nach den Co-Komponenten handelt es sich bei den Produkten z. B. um Polythiomischether, Polythioetherester oder Polythioetheresteramide. Als Polyacetale kommen z. B. die aus Glykolen, wie Diäthylenglykol, Triäthylenglykol, 4,4'-Dioxäthoxy-diphenyldimenthylmethan, Hexandiol und Formaldehyd herstellbaren Verbindungen in Frage. Auch durch Polymerisation cyclischer Acetale wie z. B. Trioxan (DE-Offenlegungsschrift 1 694 128) lassen sich erfindungsgemäß geeignete Polyacetale herstellen.

Erfindungsgemäß können auch Polyether eingesetzt werden, in welchen hochmolekulare Polyaddukte bzw. Polykondensate oder Polymerisate in feindisperser oder gelöster Form enthalten sind. Derartige Polyether werden z. B. erhalten, wenn man Polyadditionsreaktionen (z. B. Umsetzungen zwischen Polyisocyanaten und aminofunktionellen Verbindungen) bzw. Polykondensationsreaktionen (z. B. zwischen Formaldehyd und Phenolen und/oder Aminen) in situ in den obengenannten, Hydroxylgruppen aufweisenden Polyethern ablaufen läßt. Derartige Verfahren sind beispielsweise in den DE-Auslegeschriften 1 168 075 und 1 260 142, sowie den DE-Offenlegungsschriften 2 324 134, 2 423 984, 2 512 385, 2 513 815, 2 550 796, 2 550 797, 2 550 833, 2 550 862, 2 633 293 und 2 639 254 beschrieben. Es ist aber auch möglich, gemäß US-Patentschrift 3 869 413 bzw. DE-Offenlegungsschrift 2 550 860 eine fertige wäßrige Polymerdispersion mit einer Polyhydroxylverbindung zu vermischen und anschließend aus dem Gemisch das Wasser zu entfernen.

Auch durch Vinylpolymerisate modifizierte Polyetherverbindungen, wie sie z. B. durch Polymerisation von Styrol und Acrylnitril in Gegenwart von Polyethern (US-Patentschriften 3 383 351, 3 304 273, 3 523 093, 3 110 695 ; DE-Auslegeschrift 1 152 536) oder Polycarbonatpolyolen (DE-Patentschrift 1 769 795 ; US-Patentschrift 3 637 909) erhalten werden, sind für das erfindungsgemäße Verfahren geeignet. Bei Verwendung von Polyetherpolyolen, welche gemäß den DE-Offenlegungsschriften 2 442 101, 2 644 922 und 2 646 141 durch Pfropfpolymerisation mit Vinylphosphonsäureestern sowie gegebenenfalls (Meth)acrylnitril, (Meth)acrylamid oder OH-funktionellen (Meth)acrylsäureestern modifiziert wurden, erhält man Kunststoffe von besonderer Flammwidrigkeit. Polyhydroxylether, in welche durch radikalische Pfropfpolymerisation mittels ungesättigter Carbonsäuren sowie gegebenenfalls weiterer olefinisch ungesättigter Monomerer Carboxylgruppen eingeführt wurden (DE-Offenlegungsschriften 2 714 291, 2 739 620 und 2 654 746), können mit besonderem Vorteil in Kombination mit mineralischen Füllstoffen eingesetzt werden.

Bei der Mitverwendung von modifizierten Polyethern der obengenannten Art entstehen in vielen Fällen Polyurethankunststoffe mit wesentlich verbesserten mechanischen Eigenschaften.

Vertreter der genannten erfindungsgemäß zu verwendenden Verbindungen sind auch z. B. in High Polymers, Vol. XVI, « Polyurethanes, Chemistry and Technology », verfaßt von Saunders-Frisch, Interscience Publishers, New York, London, Band I, 1962, Seiten 32-42 und Seiten 44-54 und Band II, 1964, Seiten 5-6 und 198-199, sowie im Kunststoff-Handbuch, Band VII, Vieweg-Höchtlen, Carl-Hanser-Verlag, München, 1966, z. B. auf den Seiten 45-71, beschrieben. Selbstverständlich können Mischungen der obengenannten Verbindungen eingesetzt werden.

3. Gegebenenfalls als Ausgangskomponenten an sich bekannte Verbindungen mit mindestens zwei gegenüber Isocyanaten reaktionsfähigen Wasserstoffatomen und einem Molekulargewicht von 32 bis 400. Man versteht hierunter Hydroxylgruppen und/oder Aminogruppen und/oder Thiolgruppen und/oder Carboxylgruppen aufweisende Verbindungen, vorzugsweise Hydroxylgruppen und/oder Aminogruppen aufweisende Verbindungen, die in der Regel 2 bis 8, vorzugsweise 2 bis 4, gegenüber Isocyanaten reaktionsfähige Wasserstoffatome aufweisen.

Auch in diesem Fall können Mischungen von verschiedenen Kettenverlängerungs- oder Vernetzungsmitteln verwendet werden.

4. Erfindungsmäß wird der an sich bekannte Hydroxipivalinsäureneopentylglykolester der Formel

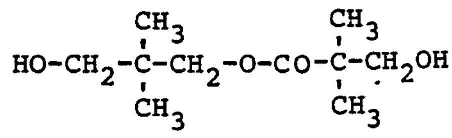

in den bereits genannten Mengen mitverwendet.

5. Als Treibmittel werden eingesetzt:

Wasser und/oder leicht flüchtige anorganische oder organische Substanzen als Treibmittel. Als organische Treibmittel kommen z. B. Aceton, Äthylacetat, halogensubstituierte Alkane wie Methylenchlorid, Chloroform, Äthylidenchlorid, Vinylidenchlorid, Monofluortrichlormethan, Chlordifluormethan, Dichlordifluormethan, ferner Butan, Hexan, Heptan oder Diäthyläther als anorganische Treibmittel z. B. Luft, $CO_2$ oder $N_2O$, in Frage. Eine Treibwirkung kann auch durch Zusatz von bei Temperaturen über Raumtemperatur unter Abspaltung von Gasen, beispielsweise von Stickstoff, sich zersetzenden Verbindungen, z. B. Azoverbindungen wie Azodicarbonamid oder Azoisobuttersäurenitril, erzielt werden. Weitere Beispiele für Treibmittel sowie Einzelheiten über die Verwendung von Treibmitteln sind im Kunststoff-Handbuch Band VII, herausgegeben von Vieweg und Höchtlen, Carl-Hanser-Verlag, München 1966, z. B. auf den Seiten 108 und 109, 453 bis 455 und 507 bis 510 beschrieben:

6. Als Katalysatoren, Stabilisatoren und weitere Zusatzstoffe werden gegebenenfalls mit verwendet:

Katalysatoren der an sich bekannten Art, z. B. tertiäre Amine, wie Triäthylamin, Tributylamin, N-Methyl-morpholin, N-Äthyl-morpholin, N,N,N',N'-Tetramethyl-äthylendiamin, Pentamethyl-diäthylentriamin und höhere Homologe (DE-Offenlegungsschriften 2 624 527 und 2 624 528), 1,4-Diazabicyclo-(2,2,2)-octan, N-Methyl-N'-dimethylaminoäthylpiperazin, bis- (dimethylaminoalkyl)-piperazine (DE-Offenlegungsschrift 2 636 787), N,N-Dimethylbenzylamin, N,N-Dimethylcyclohexylamin, N,N-Diäthylbenzylamin, Bis-(N,N-diäthylaminoäthyl)-adipat, N,N,N',N'-Tetramethyl-1,3-butandiamin, N,N-Dimethyl-phenyläthylamin, 1,2-Dimethylimidazol, 2-Methylimidazol, monocyclische und bicyclische Amidine (DE-Offenlegungsschrift 1 720 633), Bis-(dialkylamino)alkyl-äther (US-Patentschrift 3 330 782, DE Auslegeschrift 1 030 558, DE-Offenlegungsschriften 1 804 361 und 2 618 280) sowie Amidgruppen (vorzugsweise Formamidgruppen) auf weisende tertiäre Amine gemäß den DE-Offenlegungsschriften 2 523 633 und 2 732 292). Als Katalysatoren kommen auch an sich bekannte Mannichbasen aus sekundären Aminen, wie Dimethylamin, und Aldehyden, vorzugsweise Formaldehyd, oder Ketonen wie Aceton, Methyläthylketon oder Cyclohexanon und Phenolen, wie Phenol, Nonylphenol oder Bisphenol, in Frage.

Gegenüber Isocyanatgruppen aktive Wasserstoffatome aufweisende tertiäre Amine als Katalysator sind z. B. Triäthanolamin, Triisopropanolamin, N-Methyl-diäthanolamin, N-Äthyl-diäthanolamin, N,N-Dimethyl-äthanolamin, deren Umsetzungsprodukte mit Alkylenoxiden wie Propylenoxid und/oder Äthylenoxid sowie sekundär-tertiäre Amine gemäß DE-Offenlegungsschrift 2 732 292.

Als Katalysatoren kommen ferner Silaamine mit Kohlenstoff-Silizium-Bindungen, wie sie z. B. in der DE-Patentschrift 1 229 290 (entsprechend der US-Patentschrift 3 620 984) beschrieben sind, in Frage, z. B. 2,2,4-Trimethyl-2-silamorpholin und 1,3-Diäthylaminomethyl-tetramethyl-disiloxan.

Als Katalysatoren kommen auch stickstoffhaltige Basen wie Tetraalkylammoniumhydroxide, ferner Alkalihydroxide wie Natriumhydroxid, Alkaliphenolate wie Natriumphenolat oder Alkalialkoholate wie Natriummethylat in Betracht. Auch Hexahydrotriazine können als Katalysatoren eingesetzt werden (DE-Offenlegungsschrift 1 769 043).

Die Reaktion zwischen NCO-Gruppen und Zerewitinoffaktiven Wasserstoffatomen wird auch durch Lactame und Azalactame stark beschleunigt, wobei sich zunächst ein Assoziat zwischen dem Lactam und der Verbindung mit acidem Wasserstoff ausbildet. Derartige Assoziate und ihre katalytische Wirkung werden in den DE-Offenlegungsschriften 2 062 288, 2 062 289, 2 117 576 (US-Patentschrift 3 758 444), 2 129 198, 2 330 175 und 2 330 211 beschrieben.

Erfindungsgemäß können auch organische Metallverbindungen, insbesondere organische Zinnverbindungen, als Katalysatoren, verwendet werden. Als organische Zinnverbindungen kommen neben schwefelhaltigen Verbindungen wie Di-n-octyl-zinn-mercaptid (DE-Auslegeschrift 1 769 367; US-Patentschrift 3 645 927) vorzugsweise Zinn(II)-salze von Carbonsäuren wie Zinn(II)-acetat, Zinn(II)-octoat, Zinn(II)-äthylhexoat und Zinn(II)-laurat und die Zinn(IV)-Verbindungen, z. B. Dibutylzinnoxid, Dibutylzinndichlorid, Dibutylzinndiacetat, Dibutylzinndilaurat, Dibutylzinmaleat oder Dioctylzinndiacetat in Betracht.

Selbstverständlich können alle obengenannten Katalysatoren als Gemisch eingesetzt werden. Von besonderem Interesse sind dabei Kombinationen aus organischen Metallverbindungen und Amidinen, Aminopryridinen oder Hydrazinopyridinen (DE-Offenlegungsschriften 2 434 185, 2 601 082 und 2 603 834).

Weitere Vertreter von erfindungsgemäß zu verwendenden Katalysatoren sowie Einzelheiten über die Wirkungsweise der Katalysatoren sind im Kunststoff-Handbuch, Band VII, herausgegeben von Vieweg und Höchtlen, Carl-Hanser-Verlag, München 1966, z. B. auf den Seiten 96 bis 102 beschrieben.

Die Katalysatoren werden in der Regel in einer Menge zwischen etwa 0,001 und 10 Gew.-%, bezogen auf die Gesamtmenge an Polyethern mit mindestens zwei Hydroxylgruppen eingesetzt. Als Emulgatoren kommen z. B. die Natriumsalze von Ricinusöl-sulfonaten oder Salze von Fettsäuren mit Aminen wie

ölsaures Diäthylamin oder stearinsaures Diäthanolamin infrage. Auch Alkali- oder Ammoniumsalze von Sulfonsäuren wie etwa von Dodecylbenzolsulfonsäure oder Dinaphtylmethandisulfonsäure oder von Fettsäuren wie Ricinolsäure oder von polymeren Fettsäuren können als oberflächenaktive Zusatzstoffe mitverwendet werden.

Als Schaumstabilisatoren kommen vor allem Polyethersiloxane, speziell wasserlösliche Vertreter, infrage. Diese Verbindungen sind im allgemeinen so aufgebaut, daß ein Copolymerisat aus Ethylenoxid und Propylenoxid mit einem Polydimethylsiloxanrest verbunden ist. Derartige Schaumstabilisatoren sind z. B. in den US-Patentschriften 2 834 748, 2 917 480 und 3 629 308 beschrieben. Von besonderem Interesse sind vielfach über Allophanatgruppen verzweigte Polysiloxan-Polyoxyalkylen-Copolymere gemäß DE-Offenlegungsschrift 2 558 523.

Gegebenenfalls werden Reaktionsverzögerer, z. B. sauer reagierende Stoffe wie Salzsäure oder organische Säurehalogenide mitverwendet, ferner Zellregler der an sich bekannten Art wie Paraffine oder Fettalkohole oder Dimethylpolysiloxane sowie Pigmente oder Farbstoffe und Flammschutzmittel der an sich bekannten Art, z. B. Tris-chloräthylphosphat, Trikresylphosphat oder Ammonium-phosphat und -polyphosphat, ferner Stabilisatoren gegen Alterungs- und Witterungseinflüsse, Weichmacher und fungistatisch und bakteriostatisch wirkende Substanzen sowie Füllstoffe wie Bariumsulfat, Kieselgur, Ruß oder Schlämmkreide.

Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, herausgegeben von Vieweg und Höchtlen, Carl-Hanser-Verlag, München 1966, z. B. auf den Seiten 103 bis 113 beschrieben.

Durchführung des erfindungsgemäßen Verfahrens ;

Die Reaktionskomponenten werden erfindungsgemäß nach dem an sich bekannten Einstufenverfahren, dem Prepolymerverfahren oder dem Semiprepolymerverfahren zur Umsetzung gebracht, wobei man sich oft maschineller Einrichtungen bedient, z. B. solcher, die in der US-Patentschrift 2 764 565 beschrieben werden. Einzelheiten über Verarbeitungseinrichtungen, die auch erfindungsgemäß infrage kommen, werden im Kunststoff-Handbuch, Band VII, herausgegeben von Vieweg und Höchtlen, Carl-Hanser-Verlag, München 1966, z. B. auf den Seiten 121 bis 205 beschrieben.

Bei der Schaumstoffherstellung kann erfindungsgemäß die Verschäumung auch in geschlossenen Formen durchgeführt werden. Dabei wird das Reaktionsgemisch in eine Form eingetragen. Als Formmaterial kommt Metall, z. B. Aluminium, oder Kunststoff, z. B. Expoxidharz, infrage. In der Form schäumt das schäumfähige Reaktionsgemisch auf und bildet den Formkörper. Die Formverschäumung kann dabei so durchgeführt werden, daß das Formteil an seiner Oberfläche Zellstruktur aufweist, sie kann aber auch so durchgeführt werden, daß das Formteil eine kompakte Haut und einen zelligen Kern aufweist. Erfindungsgemäß kann man in diesem Zusammenhang so vorgehen, daß man in die Form so viel schäumfähiges Reaktionsgemisch einträgt, daß der gebildete Schaumstoff die Form gerade ausfüllt. Man kann aber auch so arbeiten, daß man mehr schäumfähiges Reaktionsgemisch in die Form einträgt, als zur Ausfüllung des Forminneren mit Schaumstoff notwendig ist. Im letztgenannten Fall wird somit unter « overcharging » gearbeitet ; eine derartige Verfahrensweise ist z. B. aus den US-Patentschriften 3 178 490 und 3 182 104 bekannt.

Bei der Formverschäumung werden vielfach an sich bekannte « äußere Trennmittel », wie Siliconöle, mitverwendet. Man kann aber auch sogenannte « innere Trennmittel », gegebenenfalls im Gemisch mit äußeren Trennmitteln, verwenden, wie sie z. B. aus den DE-Offenlegungsschriften 2 121 670 und 2 307 589 bekanntgeworden sind.

Erfindungsgemäß lassen sich auch kalthärtende Schaumstoffe herstellen (vgl. GB-Patentschrift 1 162 517, DE-Offenlegungsschrift 2 153 086).

Selbstverständlich können aber auch Schaumstoffe durch Blockverschäumung oder nach dem an sich bekannten Doppeltransportbandverfahren hergestellt werden.

Die folgenden Beispiele erläutern das erfindungsgemäße Verfahren :

## Beispiel 1

Die Herstellung von Weichschaumblöcken erfolgt auf einer kontinuierlich arbeitenden Hochdruckmaschine (Fa. Henneke, Birlinghoven, Siegkreis, Bundesrepublik Deutschland). Verschäumungsrezepturen von Polyolabmischungen mit steigendem Anteil an Hydroxipivalinsäureneopentylglykolester sind in der folgenden Tabelle angegeben, ferner die mechanischen Daten der resultierenden Schaumstoffe :

(Siehe die Tabelle, Seite 7)

| | 1.2 | 1.1 | 1.3 | 1.3 | 1.5 |
|---|---|---|---|---|---|
| Gew.-Tle. eines Polyethers aus einem Startergemisch von 90 % Glycerin und 10 % Dipropylenglykol und einem Mischblock aus 10 % Ethylenoxid und 90 % Propylenoxid, über 95 % sekundäre OH-Gruppen, OH-Zahl : 45 | 100 | 97 | 95 | 92 | 90 |
| Gew.-Tle. Hydroxypivalinsäureneopentylglykolesters | 0 | 3,0 | 5,0 | 8,0 | 10 |
| Gew.-Tle. Wasser | 2,5 | 2,5 | 2,5 | 2,5 | 2,5 |
| Gew.-Tle. handelsüblicher Weichschaum-Stabilisator (Polyalkylenglykol-Polysiloxan-Blockcopolymers) | 0,7 | 0,7 | 0,7 | 0,7 | 1,0 |
| Gew.-Tle. TDI (Toluylendiisocyanat, Gemisch aus 2,4 und 2,6-Diisocyanatotoluol im Gew.-Verhältnis 80 : 20) | 33,7 | 36,2 | 37,8 | 40,2 | 42,0 |
| NCO-Index | 105 | 105 | 105 | 105 | 105 |
| Dimethylethanolamin | 0,6 | 0,5 | 0,5 | 0,5 | 0,5 |
| handelsüblicher Aminaktivator (Desmorapid® PS 207, BAYER AG) | 0,15 | 0,15 | 0,15 | 0,15 | 0,15 |
| Zinn (II) octoat | 0,2 | 0,15 | 0,1 | 0,1 | 0,05 |
| Rohdichte (kg/m$^3$) | 38 | 36 | 36 | 36 | 36 |
| Zugfestigkeit (k Pa) | 105 | 120 | 145 | 150 | 180 |
| Bruchdehnung (%) | 190 | 230 | 325 | 335 | 365 |
| Stauchhärte, 40 % (k Pa) | 3,95 | 3,40 | 3,4 | 3,1 | 3,1 |
| Druckverformungsrest, 90 % (%) | 3,8 | 3,4 | 4,5 | 6,3 | klebt |

Alle erhaltenen Schaumstoffe sind offenzellig und störungsfrei. Die Flammkaschierbarkeit und HF-Verschweißbarkeit verbessert sich mit steigenden Zusatzmengen Hydroxypivalinsäureneopentylglykolester.

## Beispiel 2

Herstellung von Weichschaumblöcken erfolgt nach dem Verfahren des Beispiels 1, bei konstantem Anteil an Hydroxypivalinsäureneopentylglykolester. Die Verschäumungsrezepturen und die mechanischen Daten der erhaltenen Schaumstoffe sind in der folgenden Tabelle angegeben :

| | 2.1 | 2.2 | 2.3 |
|---|---|---|---|
| Gew.-Tle des Polyethers aus Beispiel 1 | 95 | 95 | 95 |
| Gew.-Tle. Hydroxypivalinsäureneopentylglykolester | 5 | 5 | 5 |
| Gew.-Tle. Wasser | 2,5 | 4,0 | 4,8 |
| Gew.-Tle. handelsüblicher Weichschaum-Stabilisator (Polyalkylenglykol-Polysiloxan Block-Copolymeres) | 0,8 | 1,0 | 1,2 |
| Gew.-Tle. TDI (Toluylendiisocyanat, Gemisch aus 2,4 und 2,6-Diisocyanatotoluol im Gew.-Verhältnis 80 : 20) | 38,0 | 53,7 | 62,2 |
| NCO-Index | 105 | 105 | 105 |
| Dimethylethanolamin | 0,5 | 0,3 | 0,15 |
| handelsüblicher Aminaktivator (Desmorapid® PS 207 der Bayer AG) | 0,15 | 0,15 | 0,15 |
| Zin (II)-octoat | 0,12 | 0,15 | 0,15 |
| Rohdichte (kg/m$^3$) | 37 | 26 | 22 |
| Zugfestigkeit (k Pa) | 140 | 135 | 125 |
| Bruchdehnung (%) | 395 | 240 | 230 |
| Stauchhärte, 40 % (k Pa) | 3,3 | 3,65 | 3,75 |
| Druckverformungsrest, 90 % (%) | 3,6 | 5,9 | 9,9 |
| Stauchhärteverlust nach Fordtest (%) | 18 | 14 | 16 |
| Druckverformungsrest nach Fordtest (%) | 18 | 14 | 13 |

Alle Schaumstoffe sind offenzellig und störungsfrei. Die Flammkaschierbarkeit und HF-Verschweißbarkeit verbessert sich mit steigendem Raumgewicht, d. h. der Abbrand wird vermindert, die Haftung verbessert sich.

Beispiel 3

Die Herstellung von Weichschaumblöcken erfolgt nach dem Verfahren des Beispiels 1, wobei jeweils 5 %ige Lösungen von Hydroxypivalinsäureneopentylglykolester in verschiedenen Polyetherpolyolen verwendet werden. Die Verschäumungsrezepturen und die mechanischen Daten der erhaltenen Schaumstoffe sind der folgenden Tabelle zu entnehmen :

| | 3.1 | 3.2 | 3.3 |
|---|---|---|---|
| Gew.-Tle. des Polyethers aus Beispiel 1 der OH-Zahl 45 | 95 | — | — |
| Gew.-Tle eines Polyethers, gestartetauf Trimethylolpropan, mit 100 Gew.-Tln. Propylenoxid über 97 % sekundäre OH-Gruppen, OH-Zahl 56 | — | 95 | — |
| Gew.-Tle Polyether, gestartet auf Trimethylolpropan mit 87 Gew.-Tln. Propylenoxid und endständig 13 Tln. Ethylenoxid, über 60 % primäre OH-Gruppen, OH-Zahl 35 | — | — | 95 |
| Hydroxypivalinsäureneopentylglykolester | 5 | 5 | 5 |
| Gew.-Tle. Wasser | 2,5 | 2,5 | 2,5 |
| Gew.-Tle. handelsüblicher Weichschaum-Stabilisator (Polyalkylenglykol-Polysiloxan-Blockcopolymeren) | 0,8 | 0,9 | 0,6 |
| Gew.-Tle. TDI (Toluylendiisocyanat, Gemisch aus 2,4 und 2,6-Diisocyanatotoluol im Verhältnis 80 : 20) | 38,0 | 39,4 | — |
| Dito Verhältnis 65 : 35 | — | — | 36,1 |
| NCO-Index | 105 | 105 | 105 |
| Dimethylethanolamin | 0,5 | 0,2 | — |
| handelsüblicher Aminaktivator (Desmorapid® PS 207 der Bayer-AG) | 0,15 | 0,2 | 0,25 |
| Zinn (II)-octoat | 0,12 | 0,15 | 0,10 |
| Rohdichte (kg/m³) | 37 | 36 | 39 |
| Zugfestigkeit (k Pa) | 140 | 125 | 110 |
| Bruchdehnung (%) | 395 | 290 | 210 |
| Stauchhärte 40 % (k Pa) | 3,3 | 3,5 | 4,6 |
| Druckverformungsrest 90 % (%) | 3,6 | 2,9 | 4,2 |
| Stauchhärteverlust nach Fordtest (%) | 18 | 16 | 23 |
| Druckverformungsrest nach Fordtest (%) | 18 | 21 | 26 |

Alle Schaumstoffe sind offenporig und störungsfrei. Die Variation des Grundpolyols führt zu keiner Änderund des Flammkaschierverhaltens der HF-Verschweißbarkeit.

## Ansprüche

1. Verfahren zur Herstellung von elastischen, flammkaschierbaren und hochfrequenzverschweißbaren Polyurethanschaumstoffen durch Umsetzung von

a) Polyisocyanaten mit

b) mindestens zwei Hydroxylgruppen aufweisenden Polyethern vom Molekulargewicht 400 bis 10 000 sowie

c) einer Zusatzverbindung, die eine Flammkaschierbarkeit und Hochfrequenzverschweißbarkeit des Schaumstoffs bewirkt, in Gegenwart von Treibmitteln, ggf. unter Mitverwendung von

d) Kettenverlängerungsmitteln, Katalysatoren, Stabilisatoren und weiteren an sich bekannten Zusatzstoffen, dadurch gekennzeichnet, daß als Komponente c) Hydroxipivalinsäureneopentylglykolester der Formel

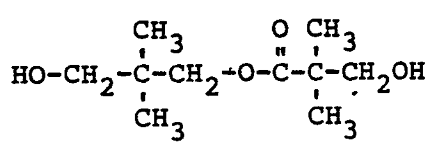

in Mengen von 1-20 Gew.-%, vorzugsweise 3-10 Gew.-%, bezogen auf den Hydroxylgruppen aufweisenden Polyether, verwendet wird.

2. Polyurethanschaumstoffe, erhältlich nach dem Verfahren gemäß Anspruch 1.

## Claims

1. Process for the preparation of elastic polyurethane foams capable of being flame laminated and high frequency welded, by the reaction of

a) polyisocyanates with

b) polyethers with molecular weights from 400 to 10 000 having at least two hydroxyl groups, and

c) an additive compound rendering the foam capable of being flame laminated and high-frequency welded, the reaction being carried out in the presence of blowing agents and optionally with the addition of

d) chain lengthening agents, catalysts, stabilizers and other known additives, characterised in that the substances used as component c) are hydroxypivalic acid neopentyl glycol esters corresponding to the formula

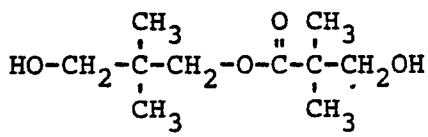

used in quantities of 1-20 % by weight, preferably 3-10 % by weight, based on the polyether containing hydroxyl groups.

2. Polyurethane foams obtainable by the process according to Claim 1.

## Revendications

1. Procédé de préparation de mousses de polyuréthanes élastiques, aptes au doublage à la flamme et au soudage par haute fréquence, par la réaction de :

a) des polyisocyanates avec

b) des polyéthers comportant au moins deux groupes hydroxy et ayant un poids moléculaire de 400 à 10 000, ainsi qu'avec

c) un additif conférant, à la mousse, une aptitude au doublage à la flamme et au soudage par haute fréquence, en présence d'agents moussants et éventuellement en utilisant conjointement :

d) des agents d'allongement de chaîne, des catalyseurs, des stabilisants et d'autres additifs connus en soi, caractérisé en ce que, comme composant c), on utilise le néopentyl-glycolester de l'acide hydroxypivalique de formule

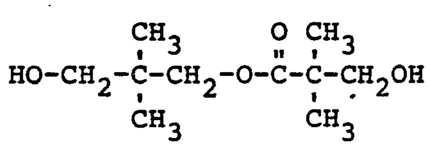

en quantités de 1 à 20 % en poids, de préférence, de 3 à 10 % en poids, calculé sur le polyéther comportant des groupes hydroxy.

2. Mousses de polyuréthanes obtenues conformément au procédé suivant la revendication 1.